# EUROPEAN PATENT APPLICATION

(11) **EP 4 761 010 A1**
(43) Date of publication of application: **17.06.2026**
(21) Application number: 24863098.0
(22) Date of filing: 26.08.2024
(51) Int. Cl.: H01R 13/66, H01R 25/00, H02J 7/02

(54) **MULTIPORT ADAPTER, ELECTRONIC DEVICE, AND METHOD FOR POWER SUPPLY CONTROL IN MULTIPORT ADAPTER**

(30) Priority: 05.09.2023 KR 20230117520; 24.10.2023 KR 20230143149
(71) Applicant: Samsung Electronics Co., Ltd., Suwon-si, Gyeonggi-do 16677 (KR)
(72) Inventor: KIM, Kunsuk, Suwon-si Gyeonggi-do 16677 (KR); LEE, Jehwan, Suwon-si Gyeonggi-do 16677 (KR)
(74) Representative: Gulde & Partner
(86) International application number: PCT/KR2024/012716
(87) International publication number: WO 2025/053517

(57) **Abstract**

According to an embodiment, a multiport adapter may comprise a power source connection port, a host connector, at least one peripheral device connection port, a power supply circuit, and a controller, wherein the controller is configured to: on the basis of power input from a power source device connected via the power source connection port, identify first power to be provided to an electronic device connected via the host connector; adjust preservation power on the basis of the identified first power and power consumption of the at least one peripheral device connection port; identify second power to be provided to the host connector electronic device, on the basis of the identified first power, the power consumption of the at least one peripheral device port, and the adjusted preservation power; and provide the identified second power to the electronic device via the host connector.

## Description

### [Technical Field]

Various embodiments of the disclosure relate to a multiport adapter and an electronic device.

### [Background Art]

In general, an adapter may be a device that converts predetermined input power into a required voltage and supplies the same. Recently, a multiport adapter (MPA) including multiple ports (or connectors) having various shapes and sizes, and enabling access of electronic devices different for each manufacturer has been widely used.

### [Detailed Description of the Invention]

### [Technical Problem]

### [Technical Solution]

A multiport adapter may include multiple ports respectively connected to an electronic device (or a host electronic device) (e.g., a notebook, a smartphone, or another electronic device), a power supply device (e.g., a power source device, a travel adapter (TA), or another power supply device), and a peripheral device (e.g., a USB memory card, an auxiliary storage, an auxiliary battery, or another peripheral device). The multiport adapter may be connected to a power supply device through one of the multiple ports, may keep part of the power received from the power supply device as power (e.g., reserve power or rated power) required to drive the multiport adapter, and may allocate the remaining power to each port.

The reserve power of the multiport adapter may be fixed as a maximum power value (or a maximum rated power value) which can be used by the multiport adapter. When the reserve power is fixed to the power value of the maximum power available for use in a multiport, the remaining power that is not actually used in the multiport may be reserved, whereby the power provided to the electronic device can be reduced, which may be inefficient. For example, in a case where a multiport adapter provides power to a host electronic device by using power received from a power supply device, when the rated power of the power supply device is less than the sum of the rated power (e.g., reserve power) of the multiport adapter and the rated power of the electronic device, the electronic device may receive power less than the rated power. When receiving power less than the rated power of the electronic device from the multiport adapter, the electronic device may use the power of the battery to maintain the rated power of the electronic device, and thus a phenomenon in which the battery is discharged while the power is supplied may occur. The electronic device may experience a slow charging rate when receiving less power due to the large reserve power of the multiport adapter, while charging using power provided from the multiport adapter. In the meantime, in a state where the reserve power of the multiport adapter is fixed, as the rated power of the power supply and the rated power of the electronic device are smaller, the ratio of the input power input to the electronic device to the rated power (or supplied power) of the power supply device may be lower. For example, when the reserve power of the multiport adapter is fixed at 15 W, and the rated power (or supplied power) of the power supply device is 100 W and the rated power of the electronic device is 100 W, the power input to the electronic device may be 85 W, so that the ratio of the rated power of the electronic device to the input power may be 85%, but when the rated power of the power supply is 30 W and the rated power of the electronic device is 30 W, the power input to the electronic device may be 15 W, so that the ratio of the rated power of the electronic device to the input power may be reduced to 50%.

According to an embodiment, a multiport adapter and a power supply control method for a multiport adapter may be provided in which the magnitude of the reserve power of the multiport adapter is not fixed to the maximum power available in the multiport, but the magnitude of the reserve power may be adjusted (or reduced) according to power actually used by the multiport adapter, whereby power can be supplied to the electronic device more efficiently.

A multiport adapter according to an embodiment may include a power connection port, a host connector, at least one peripheral device connection port, a power supply circuit, and a controller. The controller according to an embodiment may identify, based on power which is input from a power source device connected through the power connection port, first power to be provided to the electronic device connected through the host connector. The controller according to an embodiment may adjust reserve power, based on the identified first power and power consumption of the at least one peripheral device connection port. The controller according to an embodiment may identify second power to be provided to the electronic device connected through the host connector, based on the first power, the power consumption of the at least one peripheral device connection port, and the adjusted reserve power. The controller according to an embodiment may be configured to provide the second power to the electronic device through the host connector.

A power supply control method in a multiport adapter according to an embodiment may include identifying, based on power which is input from a power source device connected through a power connection port, first power to be provided to an electronic device connected through a host connector. The method according to an embodiment may include adjusting reserve power, based on the identified first power and power consumption of at least one peripheral device connection port. The method according to an embodiment may include identifying second power to be provided to the electronic device connected through the host connector, based on the first power, the power consumption of the at least one peripheral device connection port, and the adjusted reserve power. The method according to an embodiment may include providing the identified second power to the electronic device through the host connector.

An electronic device according to an embodiment may include a battery, an input port, a power delivery integrated chip (PDIC), a charging circuit, and a processor. The processor according to an embodiment may be configured to identify first power which can be input from a multiport adapter connected through the input port. The processor according to an embodiment may be configured to transmit, using the PDIC, a reserve power reduction request signal to the multiport adapter, based on identifying reduction in reserve power of the multiport adapter. The processor according to an embodiment may be configured to identify second power to be input from the multiport adapter in response to the transmission of the reserve power reduction request signal, and receive the second power.

An operation method of an electronic device according to an embodiment may include identifying first power to be input from a multiport adapter connected through an input port. The method according to an embodiment may include transmitting a reserve power reduction request signal to the multiport adapter, based on identifying reduction in reserve power of the multiport adapter. The method according to an embodiment may include identifying second power to be input from the multiport adapter in response to the transmission of the reserve power reduction request signal. The method according to an embodiment may include receiving the second power from the multiport adapter.

An operation method of an electronic device connected to a multiport adapter according to an embodiment may include in case that the multiport adapter is connected to the electronic device, providing first power to the electronic device by using power input from a power source device connected through a power connection port. The method according to an embodiment may include in case that a charging state of a battery of the electronic device using a charging circuit of the electronic device corresponds to a discharging state in which the first power received from the multiport adapter is less than power consumption of the electronic device, or a high-speed charging state, transmitting a reserve power reduction request signal to the multiport adapter through configuration channel (CC) communication or programmable power supply (PPS) communication by the electronic device. The method according to an embodiment may include in response to reception of the reserve power reduction request signal, adjusting reserve power, based on the power and power consumption of at least one peripheral device connection port, and providing, based on the power, the power consumption of the at least one peripheral device connection port, and the adjusted reserve power, second power to the electronic device by the multiport adapter. The method according to an embodiment may include receiving the second power from the multiport adapter by the electronic device.

### [Advantageous Effects]

### [Brief Description of Drawings]

FIG. 1 is a block diagram illustrating an electronic device in a network environment according to an embodiment.
FIG. 2 is a block diagram illustrating a multiport adapter according to an embodiment.
FIG. 3 is a flowchart illustrating an operation of power supply control in a multiport adapter according to an embodiment.
FIG. 4 is a flowchart illustrating a power supply control operation in a multiport adapter, based on a reserve power adjustment request from an electronic device according to an embodiment.
FIG. 5 is a diagram illustrating configuration of a power source device, a multiport adapter, and an electronic device according to an embodiment.
FIG. 6a is a diagram illustrating a power supply device, a multiport adapter, and an electronic device in a case where the multiport adapter includes a sensor for sensing power consumption, according to an embodiment.
FIG. 6b is a block diagram illustrating a PDIC of a multiport adapter according to an embodiment.
FIG. 7 is a diagram illustrating a power supply device, a multiport adapter, and an electronic device in a case where the multiport adapter receives a reserve power adjustment request from the electronic device, according to an embodiment.
FIG. 8 is a flowchart illustrating an operation of receiving power from a multiport adapter in an electronic device, based on a power reserve adjustment request, according to an embodiment.

In describing the drawings, the same or similar elements may be referred to by the same or similar reference numerals.

### [Mode for Carrying out the Invention]

Hereinafter, embodiments of the disclosure will be described in detail with reference to the accompanying drawings so that those skilled in the art to which the disclosure belongs can easily implement the embodiments of the disclosure. However, the disclosure may be embodied in various different forms, and is not limited to the embodiments described herein. In describing the drawings, the same or similar elements may be referred to by the same or similar reference numerals. In addition, in the drawings and related descriptions, descriptions of well-known functions and configurations may be omitted for clarity and brevity

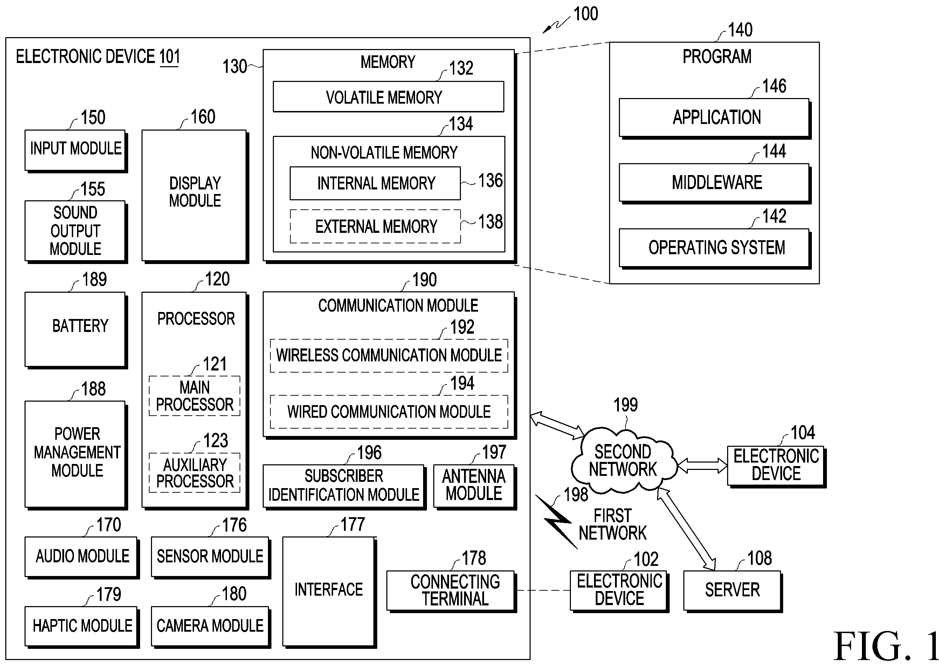

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, descriptions of configurations that may be easily understood through prior embodiments will be omitted or the same reference numerals will be given to the same elements, and detailed descriptions thereof may also be omitted. The electronic device 101 according to an embodiment disclosed herein may be implemented by selectively combining the configurations of the respective embodiments, and the configurations of one embodiment may be replaced. For example, it should be noted that the disclosure is not limited to a specific drawing or embodiment.

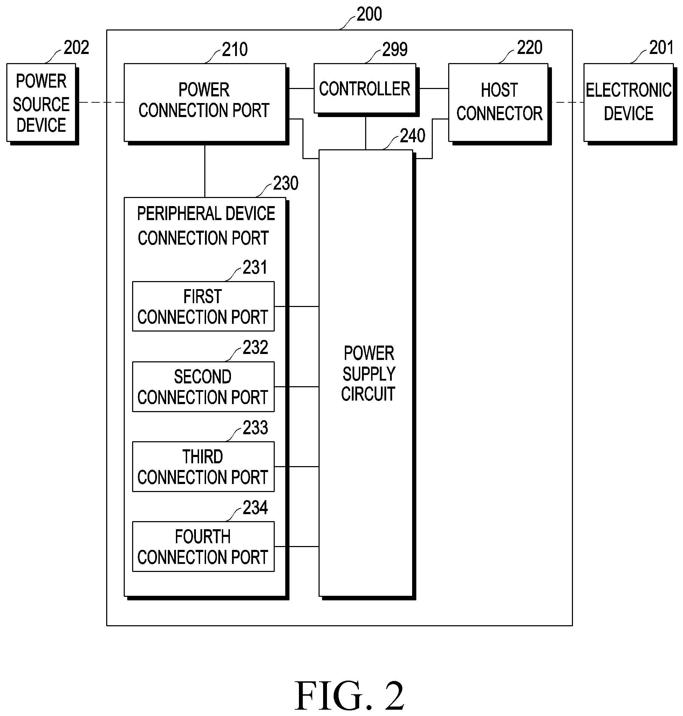

FIG. 2 is a block diagram illustrating a multiport adapter according to an embodiment.

Referring to FIG. 2, a multiport adapter (MPA) 200 according to an embodiment may include a power connection port 210, a host connector 220, a peripheral device connection port 230, a power supply circuit 240, and a controller 299. The multiport adapter 200 according to an embodiment may be configured to include additional elements, or exclude some of the elements, without being limited thereto.

The power connection port 210 according to an embodiment may be connected to a power source device 202 through a cable (not shown) for power transmission and data communication. The power connection port 210 may include a power pin (e.g., VBUS) for receiving power from the power source device 202 and a signal pin (not illustrated) for data communication (e.g., power delivery (PD)) with the power source device 202. According to an embodiment, the power connection port 210 may include a universal serial bus (USB) Type C port (or a Type C port female or a Type C socket). The Type C Port (female) of the power connection port 210 may be coupled with a Type C Port (male) of the power source device 202.

The power supply 202 according to an embodiment may include an adapter (e.g., a travel adapter (TA)). For example, the power source device 202 may convert a current characteristic of power introduced from an external power source from alternating current (AC) to direct current (DC), and may adjust a voltage of the power to a specified voltage value. The power source device 202 may perform a variable function (e.g., a programmable power supply (PPS)) of changing a characteristic (e.g., a current and/or a voltage) of power, according to control of the multiport adapter 200 or the electronic device 201 (or host electronic device) (e.g., the electronic device 101 of FIG. 1) through the multiport adapter 200. For example, the power source device 202 may lower or raise the current of power to be output to the multiport adapter 200 in response to a control signal received from the controller 299 of the multiport adapter 200 or a control signal received from the processor (e.g., the processor 120 of FIG. 1) of the electronic device 201 through the multiport adapter 200. The power source device 202 may lower or raise the voltage of the power to be output to the multiport adapter 200 in response to the control signal. The power source device 202 may, in the absence of the variable function, output power with the current and/or voltage fixed at a specified value. When the power source device 202 is a model that supports the variable function, the power source device 202 may change the voltage (or current) of power to be output to the electronic device 201 (e.g., an external portable electronic device) to a voltage value (or current value) configured for charging a battery (e.g., the battery 189 of FIG. 1) of the portable electronic device. When the power source device 202 is a model that does not support the variable function, a charging circuit (e.g., the power management module 188) of the electronic device 201 may adjust the voltage (or current) of power received from the power source device 202 to a voltage (or voltage value) configured for charging the battery (e.g., the battery 189) of the portable electronic device.

The host connector 220 according to an embodiment may be connected to the electronic device 201 (e.g., the electronic device 101 of FIG. 1). The electronic device 201 according to an embodiment may be a smartphone or a notebook PC, as a portable electronic device, but this is merely an example, and various portable electronic devices of a user may be connected to the multiport adapter 200 through the host connector 220. The host connector 220 according to an embodiment may include at least one a power pin (not shown) for transmitting power received from the power source device 202 to the electronic device 201, a signal pin (not shown) for data communication between the electronic device 201 and the controller 299 (e.g., at least one signal pin for communication (e.g., power delivery (PD) communication)), and at least one signal pin for data communication between the electronic device 201 and a peripheral device connected to the peripheral device connection port 230. According to an embodiment, the host connector 220 may include a USB Type C port (or a Type C port male). The Type C Port (male) of the host connector 220 may be coupled with a Type C Port (female) of the electronic device 201.

The peripheral device connection port 230 according to an embodiment may include at least one peripheral device connection port (e.g., a first connection port 231, a second connection port 232, a third connection port 233, and/or a fourth connection port 234). Each of the at least one peripheral device connection port 230 may be connected to a peripheral device (not shown) through a cable for power transmission and data communication. The peripheral device may receive power from the power supply circuit 240 through a port (e.g., the first connection port 231, the second connection port 232, the third connection port 233, or the fourth connection port 234). Although four peripheral device ports 230 are illustrated in FIG. 2, this is merely an example, and there may be fewer or more peripheral device ports. Each of the at least one port 230 according to an embodiment may include a power pin (not shown) for transmitting power received from the power source device 202 to a peripheral device, and a signal pin (not shown) for data communication between the electronic device 201 and the peripheral device. For example, the first port 231 may include a USB Type-A (or B) port (or socket), and may be connected to a peripheral device (e.g., a USB memory card, an auxiliary storage device, an auxiliary battery, or other peripheral devices). The second port 232 may include a USB Type-A (or B) port and may be connected to a peripheral device (e.g., a USB memory card, an auxiliary storage device, an auxiliary battery, or other peripheral devices). The third port 233 may include a LAN port (e.g., an Ethernet port) and may be connected to a peripheral device (e.g., a modem or a router for connecting to the Internet). The fourth port 234 may include a high definition multimedia interface (HDMI) port, and may be connected to a peripheral device (e.g., a display device).

The power supply circuit 240 according to an embodiment may receive power from the power source device 202 through the power connection port 210 (e.g., a power pin (not shown) of the power connection port 210). The power supply circuit 240 according to an embodiment may include a DC/DC converter. The DC/DC converter according to an embodiment may step up or step down a voltage of received power, and may perform an internal power source function of the multiport adapter 200. The power supply circuit 240 according to an embodiment may output, based on control of the controller 299, power (or a power amount) remaining after excluding reserve power (or a reserve power amount) from the power (or power amount) received from the power source device 202, to the electronic device 201 and/or at least one peripheral device connected to the multiport adapter 200. The reserve power (e.g., first reserve power or a first reserve power amount) according to an embodiment may be maximum power (or a maximum power amount or a rated power amount) specified for the multiport adapter 200 to be used (or consumed) in the multiport adapter 200 (or elements (e.g., the power connection port 210, the host connector 220, the peripheral device connection port 230, the power supply circuit 240, and/or the controller 299) included in the multiport adapter 200). The adjusted reserve power (e.g., second reserve power or a second reserve power amount) according to an embodiment may be second reserve power obtained by adjusting or reducing, based on power consumption of at least one peripheral device connection port, the first reserve power specified for the multiport adapter 200.

According to an embodiment, the controller 299 may control the power supply circuit 240 such that power remaining after excluding the reserve power (e.g., the first preserved power or the second preserved power) from the power (power amount) received from the power source device 202 is supplied to (or input to) the electronic device 201 and/or the at least one peripheral device connected to the multiport adapter 200.

The controller 299 according to an embodiment may identify power (e.g., a power amount, power information, or a power value) which can be provided (or received or input) from the power source device 202 connected through the power connection port 210. The controller 299 according to an embodiment may include a power delivery integrated chip (PDIC). According to an embodiment, the controller 299 may perform USB Type C-based configuration channel (CC) communication with the power source device 202 connected to the power connection port 210 through the PDIC. According to an embodiment, the controller 299 may identify power (e.g., a power amount, power information, or a power value) which can be provided (or received) from the power source device 202 through the CC communication with the power source device 202.

The controller 299 according to an embodiment may identify specified reserve power (e.g., a first reserve power amount, first reserve power information, or a first reserve power value) of the multiport adapter 200. The controller 299 according to an embodiment may identify specified first reserve power (e.g., tens of W or 15 W) of the multiport adapter 200 stored in memory (not shown). The first reserve power according to an embodiment may be maximum power (or a specified maximum power amount or a rated power amount) specified for the multiport adapter 200 so as to be used (or consumed) in the multiport adapter 200 (or elements (e.g., the power connection port 210, the host connector 220, the peripheral device connection port 230, the power supply circuit 240, and/or the controller 299) included in the multiport adapter 200).

The controller 299 according to an embodiment may identify reserve power (e.g., second reserve power, a second reserve power amount, second reserve power information, or a second reserve power value) adjusted based on the first reserve power and power consumption of at least one peripheral device connection port (e.g., power consumption by the peripheral device connection port 230). The adjusted reserve power according to an embodiment may be equal to or less (or less than) than specified reserve power. Upon the connection of the electronic device 201, the controller 299 according to an embodiment may provide the first power to the electronic device 201, based on the power from the power source 202 and the first reserve power, then receive a request for adjustment of reserve power from the electronic device 201, and identify adjusted reserve power (second reserve power, a second reserve power amount, or second reserve power information), based on the request for adjustment of the reserve power.

According to an embodiment, the controller 299 may identify power consumption of the peripheral device connection ports 230, based on whether a peripheral device is connected to the at least one of the peripheral device connection ports 230, and may identify the second reserve power, based on the identified power consumption. Table 1 below may show power consumption (or second reserve power) according to whether at least one peripheral device is connected to the peripheral device connection port 230 according to an embodiment.

**[Table 1]**

| Classification | Default power consumption | First connection port (USB_1) | Second connection port (USB_1) | Third connection port (LAN) | First connection port (USB_1) | |
|---|---|---|---|---|---|---|
| Rated power (or power consumption) | 1W | 5W | 5W | 2W | 2W | Power consumption (second reserve power) |
| Connected or not | O | - | - | - | - | 1 W |
| | O | 0 | - | - | - | 6W |
| | O | 0 | O | - | - | 11 W |
| | O | 0 | O | O | - | 13 W |
| | O | - | - | O | O | 5 W |
| | O | - | O | O | O | 10 W |
| | 0 | O | O | O | O | 15 W |

Referring to Table 1 above, when a peripheral device is not connected to the peripheral device connection port 230 (or the first port 231, the second port 232, the third port 233, and the fourth port 234), the controller 299 according to an embodiment may identify (determine, check, or calculate) second reserve power (e.g., about 1 W), based on power (e.g., about 1 W) consumed (e.g., default power consumption) by the elements (e.g., the power connection port 210, the host connector 220, the power supply circuit 240, and/or the controller 299) of the multiport adapter 200, expect for the peripheral device connection port 230. When a peripheral device is connected to the first port 231 and no peripheral device is connected to the second port 232, the third port 233, and the fourth port 234, the controller 299 according to an embodiment may identify (determine, check, or calculate) the sum (e.g., about 6 W) of the default power consumption (e.g., about 1 W) and the power consumption (e.g., about 5 W) of the first port 231 as second reserve power (e.g., about 6 W). When a peripheral device is connected to the first port 231 and the second port 232, and no peripheral device is connected to the third port 233 and the fourth port 234, the controller 299 according to an embodiment may identify (determine, check, or calculate) the sum of the default power consumption (e.g., about 1 W), the power consumption (e.g., about 5 W) of the first port 231, and the power consumption (e.g., about 5 W) of the second port 232 as second reserve power (e.g., about 11 W). When a peripheral device is connected to the first port 231, the second port 232, and the third port 233 and no peripheral device is connected to the fourth port 234, the controller 299 according to an embodiment may identify (determine, check, or calculate) the sum of the default consumption power (e.g., about 1 W), the power consumption (e.g., about 5 W) of the first port 231, the power consumption (e.g., about 5 W) of the second port 232, and the power consumption (e.g., about 2 W) of the third port 233 as second reserve power (e.g., about 13 W). When a peripheral device is not connected to the first port 231 and the second port 232 and a peripheral device is connected to the third port 233 and the fourth port 234, the controller 299 according to an embodiment may identify (determine, check, or calculate) the sum of the power consumption (e.g., about 1 W) of the default power consumption circuit, the power consumption (e.g., about 2 W) of the third port 233, and the power consumption (e.g., about 2 W) of the fourth port 234 as second reserve power (e.g., about 5 W). When a peripheral device is not connected to the first port 231 and a peripheral device is connected to the second port 232, the third port 233, and the fourth port 234, the controller 299 according to an embodiment may identify (determine, check, or calculate) the sum of the default power consumption (e.g., about 1W), the power consumption (e.g., about 5W) of the second port 232, the power consumption (e.g., about 2W) of the third port 233, and the power consumption (e.g., about 2W) of the fourth port 234 as second reserve power (e.g., about 10W). When a peripheral device is connected to all the first port 231, the second port 232, the third port 233, and the fourth port 234, the controller 299 according to an embodiment may identify (determine, check, or calculate) the sum of the default power consumption (e.g., about 1 W), the power consumption (e.g., about 5 W) of the first port 231, the power consumption (e.g., about 5 W) of the second port 232, the power consumption (e.g., about 2 W) of the third port 233, and the power consumption (e.g., about 2 W) of the fourth port 234 as second reserve power (e.g., about 15 W). The controller 299 according to an embodiment may sense (or detect) output power of a DC/DC converter in the power supply circuit 240 capable of performing an internal power function of the multiport adapter 200, and identify the power consumption of the peripheral device connection port 230, based on the sensed output power of the DC/DC converter. The controller 299 according to an embodiment may identify second reserve power, based on the power consumption identified based on the sensed output power of the DC/DC converter. The controller 299 according to an embodiment may identify (or check, determine, or calculate) second power that can be provided to the electronic device 201, based on the power from the power source device 202, the power consumption of the at least one peripheral device port 230, and the second reserve power. The controller 299 according to an embodiment may provide second power to the electronic device 201.

A multiport adapter (e.g., the adapter 200 of FIG. 2) may include a power connection port 210, a host connector 220, at least one peripheral device connection port 230, a power supply circuit 240, and a controller 299. The controller according to an embodiment may be configured to identify, based on power which is input from a power source device connected through the power connection port, first power to be provided to the electronic device connected through the host connector. The controller according to an embodiment may be configured to adjust reserve power, based on the identified first power and power consumption of at least one peripheral device connection port. The controller according to an embodiment may be configured to identify second power to be provided to the electronic device connected through the host connector, based on the identified first power, the power consumption of the at least one peripheral device connection port, and the adjusted reserve power. The controller according to an embodiment may be configured to provide the identified second power to the electronic device through the host connector.

The controller according to an embodiment may be further configured to identify power consumption of the at least one peripheral device port, based on whether a peripheral device is connected to the at least one peripheral device connection port.

The controller according to embodiment may further include a sensor connected to the power supply circuit, and the controller may be further configured to identify power consumption of the at least one peripheral device port, based on output power of the power supply circuit, the output power being obtained using the sensor circuit.

The controller according to an embodiment may be further configured to after providing first power to the electronic device, based on specified first reserve power of the multiport adapter and the power, receive a request for adjusting the reserve power from the electronic device.

With respect to the controller according to an embodiment, the at least one peripheral device connection port may include a first USB port, a second USB port, a LAN port, or an HDMI port.

The power connection port according to an embodiment may be a USB Type C port (female), and the host connector may be a USB Type C port (male).

The controller according to an embodiment may be further configured to perform power deliver (PD)-based configuration channel (CC) communication or programmable power supply (PPS) communication with the electronic device.

Memory for storing information on the specified first reserve power of the multiport adapter according to an embodiment may be further included.

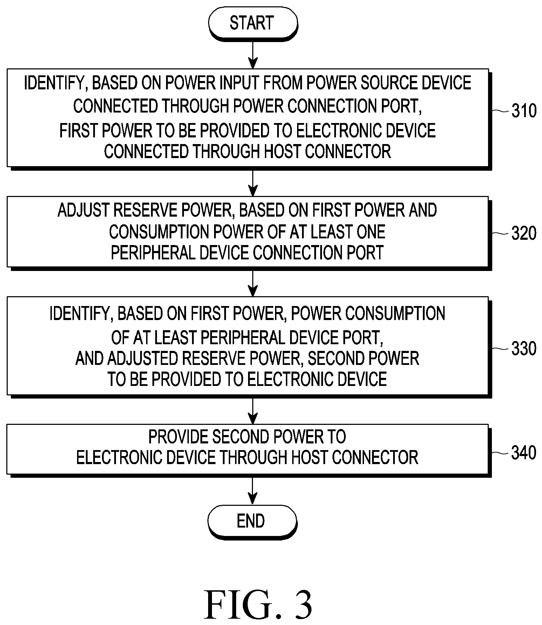

FIG. 3 is a flowchart illustrating an operation of power supply control in a multiport adapter according to an embodiment.

Referring to FIG. 3, a multiport adapter (e.g., the multiport adapter 200 of FIG. 2) or a controller (e.g., the controller 299 of FIG. 2) of the multiport adapter 200 according to an embodiment may perform at least one of operations 310, 320, 330, and 340. In an embodiment, at least one of operations 310, 320, 330, and 340 may be omitted, the order of some operations may be changed, or another operation may be added.

In operation 310, the controller 299 according to an embodiment may identify first power to be provided to an electronic device connected through a host connector, based on power input from a power source device 202 connected through a power connection port 210. The controller 299 according to an embodiment may further identify specified reserve power of the multiport adapter 200. The controller 299 according to an embodiment may include a power delivery integrated chip (PDIC). The controller 299 according to an embodiment may perform USB Type C-based configuration channel (CC) communication with the power source device 202 connected to the power connection port 210 through the PDIC. The controller 299 according to an embodiment may identify power (e.g., a power amount, power information, or a power value) which can be input (or received or provided) from the power source device 202 through the CC communication with the power source device 202. The controller 299 according to an embodiment may identify specified first reserve power (e.g., first reserve power, a first reserve power amount, first reserve power information, tens of W, or 15 W) of the multiport adapter 200, stored in memory (not shown). The first reserve power according to an embodiment may be maximum power (or rated power) specified for the multiport adapter 200 to be used (or consumed) by the multiport adapter 200 (or elements (e.g., the power connection port 210, the host connector 220, the peripheral device connection port 230, the power supply circuit 240, and/or the controller 299) included in the multiport adapter 200).

In operation 320, the controller 299 according to an embodiment may adjust the reserve power, based on the first power and power consumption of at least one peripheral device connection port 230. The controller 299 according to an embodiment may identify power consumption of the at least one peripheral device connection port 230, based on whether at least one peripheral device is connected to the peripheral device connection port 230, and may adjust the reserve power (to second reserve power), based on the identified power consumption. The controller 299 according to an embodiment may sense (or detect) output power of a DC/DC converter in the power supply circuit 240 capable of performing an internal power function of the multiport adapter 200, and may identify power consumption of at least one peripheral device connection port 230, based on the sensed output power of the DC/DC converter. The controller 299 according to an embodiment may identify second reserve power, based on the power consumption identified based on the sensed output power of the DC/DC converter, and may adjust the reserve power to the identified amount of the second reserve power.

In operation 330, the controller 299 according to an embodiment may identify (or check, determine, or calculate) second power which can be provided to the electronic device 201, based on the first power, the power consumption of at least one peripheral device port, and the adjusted reserve power.

In operation 340, the controller 299 according to an embodiment may provide the second power to the electronic device 201 through the host connector 220

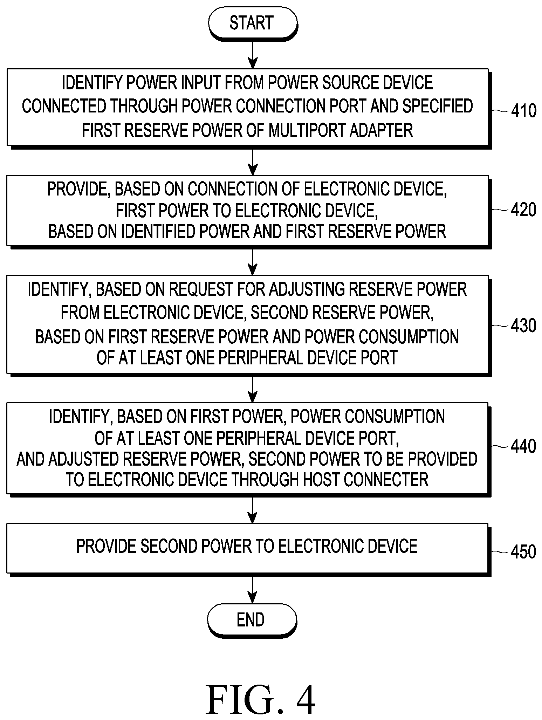

FIG. 4 is a flowchart illustrating a power supply control operation in a multiport adapter, based on a reserve power adjustment request from an electronic device according to an embodiment.

Referring to FIG. 4, a multiport adapter (e.g., the multiport adapter 200 of FIG. 2) or a controller (e.g., the controller 299 of FIG. 2) of the multiport adapter 200 according to an embodiment may perform at least one of operations 410, 420, 430, and 440. In an embodiment, at least one of operations 410, 420, 430, and 440 may be omitted, the order of some operations may be changed, or other operations may be added.

In operation 410, the controller 299 according to an embodiment may identify power input from a power source device 202 connected through a power connection port 210, and specified first reserve power (e.g., a first reserve power amount, first reserve power information, or a first reserve power value) of the multiport adapter 200. The controller 299 according to an embodiment may include a power delivery integrated chip (PDIC). The controller 299 according to an embodiment may perform USB Type C-based configuration channel (CC) communication with the power source device 202 connected to the power connection port 210 through the PDIC. The controller 299 according to an embodiment may identify power (e.g., a power amount, power information, or a power value) which can be input (or received or provided) from the power source device 202 through the CC communication with the power source device 202. The controller 299 according to an embodiment may identify specified first reserve power (e.g., tens of W or 15 W) of the multiport adapter 200, stored in memory (not shown). The first reserve power according to an embodiment may be maximum power (or a rated power amount) specified for the multiport adapter 200 to be used (or consumed) by the multiport adapter 200 (or elements (e.g., the power connection port 210, the host connector 220, the peripheral device connection port 230, the power supply circuit 240, and/or the controller 299) included in the multiport adapter 200).

In operation 420, based on the connection of the electronic device 201, the controller 299 according to an embodiment may provide the first power to the electronic device 201, based on the identified power and the first reserve power. The controller 299 according to an embodiment may receive a request to adjust the reserve power from the electronic device 201 while providing the first power based on the first reserve power to the electronic device 201

In operation 430, based on a request for adjusting the reserve power received from the electronic device 201, the controller 299 according to an embodiment may identify second reserve power (e.g., a second reserve power amount, second reserve power information, or a second reserve power value), based on the first reserve power and power consumption of at least one peripheral device port 230. The second reserve power according to an embodiment may be equal to or less than (or may be less than) the first reserve power. The controller 299 according to an embodiment may identify power consumption of the at least one peripheral device port 230, based on whether at least one peripheral device is connected to the peripheral device connection port 230, and may identify second reserve power, based on the identified power consumption. The controller 299 according to an embodiment may sense (or detect) output power of a DC/DC converter in the power supply circuit 240 capable of performing an internal power function of the multiport adapter 200, and identify power consumption of at least one peripheral device port 230, based on the sensed output power of the DC/DC converter. The controller 299 according to an embodiment may identify second reserve power, based on power consumption identified based on the sensed output power of the DC/DC converter.

In operation 440, the controller 299 according to an embodiment may identify (or check, determine, or calculate) second power to be provided to the electronic device 201 through the host connector, based on the first power, the power consumption of the at least one peripheral device port, and the adjusted reserve power.

In operation 450, the controller 299 according to an embodiment may provide the second power to the electronic device 201.

A power supply control method in a multiport adapter (e.g., the multiport adapter 200 of FIG. 2) according to an embodiment may include identifying, based on power which is input from a power source device 202 connected through a power connection port 210, first power to be provided to an electronic device 201 connected through a host connector 220. The method according to an embodiment may include adjusting reserve power, based on the identified first power and power consumption of at least one peripheral device connection port. The method according to an embodiment may include identifying second power to be provided to the electronic device 201 connected through the host connector, based on the identified first power, the power consumption of the at least one peripheral device connection port, and the adjusted reserve power. The method according to an embodiment may include providing the identified second power to the electronic device through the host connector.

The method according to an embodiment may further include identifying, based on whether a peripheral device is connected to each of the at least one peripheral device connection port of the multiport adapter, the power consumption of the at least one peripheral device connection port.

The method according to an embodiment may further include identifying power consumption of the at least one peripheral device port, based on output power of a power supply circuit of the multiport adapter, the output power being obtained using a sensor circuit of the multiport adapter.

The method according to an embodiment may further include after providing first power to the electronic device, based on specified first reserve power of the multiport adapter and the power, receiving a request for adjusting the reserve power for the at least one peripheral device connection port from the electronic device.

In the method according to an embodiment, the at least one peripheral device connection port may include a first USB port, a second USB port, a LAN port, or an HDMI port.

In the method according to an embodiment, the power connection port according to an embodiment may be a USB Type C port (female), and the host connector may be a USB Type C port (male).

The method according to an embodiment may further include performing power deliver (PD)-based configuration channel (CC) communication or programmable power supply (PPS) communication with the electronic device.

The method according to an embodiment may include obtaining information on the specified first reserve power of the multiport adapter, stored in memory of the multiport adapter.

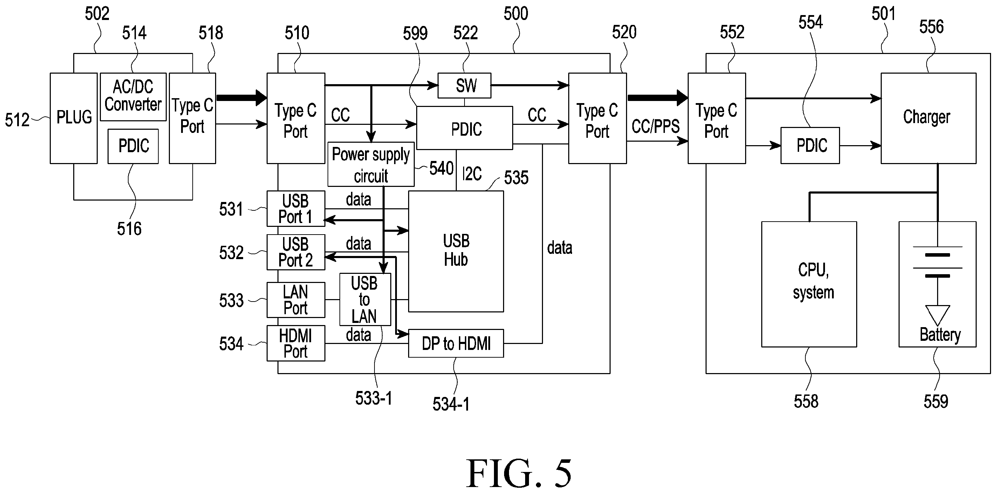

FIG. 5 is a diagram illustrating configuration of a power source device, a multiport adapter, and an electronic device according to an embodiment.

Referring to FIG. 5, a power source device 502 (e.g., the power supply device 202 of FIG. 2) according to an embodiment may include a plug 512, an AC/DC converter 514, a PDIC 516, and a Type C port 518. The plug 512 according to an embodiment may be physically connected to an external power outlet. The AC/DC converter 514 according to an embodiment may convert an alternating current received from the external power outlet into a direct current, and may adjust a voltage of the power to a specified voltage value. The PDIC 516 according to an embodiment may perform communication (e.g., power delivery (PD) communication) with the multiport adapter 500 (e.g., the multiport adapter 200 of FIG. 2). The Type C port 518 according to an embodiment may include a power pin (not shown) for transmitting power received from the external power outlet to the multiport adapter 500, and a signal pin (not shown) for data communication between the multiport adapter 500 and the PDIC 516 (e.g., at least one signal pin for communication (e.g., power delivery (PD) communication)). According to an embodiment, the Type C port 518 may include a Type C Port male, and the Type C Port male may be combined with the Type C Port (female) 510 of the multiport adapter 500.

The multiport adapter 500 (e.g., the multiport adapter 200 of FIG. 2) according to an embodiment may include a Type C Port (female) 510, a Type C Port (male) 520, a switch (SW) 522, USB port 1 531, USB port 2 532, a LAN port 533, a USB-to-LAN module 533-1, an HDMI port 534, a DP-to-HDMI module 534-1, a USB hub 535, a power supply circuit 540, and/or a PDIC 599. The multiport adapter 500 according to an embodiment is not limited thereto, and may be configured to include various other elements, or exclude some of the elements above.

The Type C port (female) 510 (e.g., the power connection port 210 of FIG. 2) according to an embodiment may include a power pin (e.g., VBUS) for receiving power from a power source device 502, and a signal pin (not shown) for data communication (e.g., data communication for power delivery (PD) (hereinafter, referred to as PD communication)) with the power source device 502. According to an embodiment, the Type C port (female) 510 may be coupled with the Type C port (male) 518 of the power source device 502.

The Type C port (male) 520 (e.g., the host connector 220 of FIG. 2) according to an embodiment may include a power pin (not shown) for transmitting power received from the power source device502 to an electronic device (or a host electronic device) 501, a signal pin (not shown) for data communication between the electronic device 501 and the PDIC 599 (e.g., at least one signal pin for communication (e.g., PD communication or PPS communication)), and at least one signal pin for data communication between the electronic device 501 and a peripheral device connected to the USB port 1 531, the USB port 2 532, the LAN port 533, or the HDMI port 534. According to an embodiment, the Type C port (male) 520 may be coupled with the Type C port (female) 552 of the electronic device 501.

The switch 522 according to an embodiment may perform connection or disconnection between power pins of the Type C port (female) 510 and the Type C port (male) 520, based on the control of the PDIC 599. When the power pins of the Type C port (female) 510 and the Type C port (male) 520 according to are connected to each other, power from the power supply 502 may be transferred to the electronic device 501 without passing through the power supply circuit 540.

The USB port 1 (or a first USB port) 531 (e.g., the first port 231 of FIG. 2), USB port 2 (or a second USB port) 532 (e.g., the second port 232 of FIG. 2), LAN port 533 (e.g., the third port 233 of FIG. 3), and HDMI port 534 (e.g., the fourth port 234 of FIG. 2) according to an embodiment may be peripheral device connection ports (e.g., the peripheral device connection port 230 of FIG. 2).

Each of the USB port 1 531, USB port 2 532, LAN port 533, or HDMI port 534 according to an embodiment may include a power pin (not shown) for transmitting power received from the power source device 502 to a peripheral device, and a signal pin (not shown) for data communication between the electronic device 501 and the peripheral device. The USB port 1 531 according to an embodiment may include a USB Type-A (or B) port (or socket), and may be connected to a peripheral device (e.g., a USB memory card, an auxiliary storage device, an auxiliary battery, or other peripheral devices). In an embodiment, the USB port 2 532 may include a USB Type-A (or B) port, and may be connected to a peripheral device (e.g., a USB memory card, an auxiliary storage device, an auxiliary battery, or other peripheral devices). The LAN port 533 may include an Ethernet port, and may be connected to a peripheral device (e.g., a modem or a router for connecting to the Internet). The HDMI port 534 may include a high definition multimedia interface (HDMI), and may be connected to a peripheral device (e.g., a display device). The USB to LAN module 533-1 according to an embodiment may convert data based on a LAN protocol into data based on a USB protocol, or may convert data based on a USB protocol into data based on a LAN protocol. The DP to HDMI module 534-1 according to an embodiment may convert display data into HDMI-based data, or may convert HDMI-based data into display data. The USB hub 535 according to an embodiment may perform a hub role in transmitting/receiving data between USB-based ports (e.g., the USB port 1 531, USB port 2 532, and LAN port 533) and the PDIC 599. The USB hub 535 according to an embodiment may identify the connection of a peripheral device to each of the USB-based ports (e.g., the USB port 1 531, USB port 2 532, and LAN port 533), and may transfer information on whether a peripheral device is connected to the PDIC 599 through I2C communication.

The power supply circuit 540 (e.g., the power supply circuit 240 of FIG. 2) according to an embodiment may receive power from the power source device 502 through the Type C port 510 (e.g., a power pin (not shown) of the Type C port 510). The power supply circuit 540 according to an embodiment may include a DC/DC converter. The DC/DC converter according to an embodiment may step up or step down the voltage of the received direct current power, and may perform an internal power function of the multiport adapter 500. The power supply circuit 540 according to an embodiment may supply, based on control of the controller 599, power (e.g., the output power amount) remaining after excluding the reserve power (or the reserve power amount) from the power (or the power amount) received from the power source device 502, to the electronic device 501 and/or at least one peripheral device connected to the multiport adapter 500. The reserve power (e.g., the first reserve power or the first reserve power amount) according to an embodiment may be the maximum power (or rated power amount) specified for the multiport adapter 500 to be used (or consumed) in the multiport adapter 500 (or the elements (e.g., the Type C Port (female) 510, the Type C Port (male) 520, the switch (SW) 522, the USB port 1 531, the USB port 2 532, the LAN port 533, the USB to LAN module 533-1, the HDMI port 534, the DP to HDMI module 534-1, the USB Hub 535, and/or the PDIC 599) included in the multiport adapter 500). The adjusted reserve power (e.g., the second reserve power or the second reserve power amount) according to an embodiment may obtained by adjusting (reducing), based on power consumption of at least one peripheral device connection port (e.g., the USB port 1 531, the USB port 2 532, the LAN port 533, the USB to LAN module 533-1, or the HDMI port 534), first reserve power specified for the multiport adapter 200.

According to an embodiment, the PDIC 599 (e.g., the controller 299 of FIG. 2) may identify power consumption of at least one peripheral device connection port, based on whether a peripheral device is connected to at least one port among the USB port 1 531, the USB port 2 532, the LAN port 533, and the HDMI port 534, and may identify second reserve power, based on the identified power consumption.

The PDIC 599 according to an embodiment may identify (or check, determine, or calculate) second power which can be provided the electronic device 501, based on power received from the power source device 502, the power consumption of the at least one peripheral device port, and the second reserve power. The PDIC 599 according to an embodiment may control the power supply circuit 540 so as to supply power to the Type C port (male) 520 of the electronic device 501, based on the second power. The PDIC 599 according to an embodiment may provide fixed second power through power delivery (PD)-based CC communication with the electronic device 501 by using the Type C port (male) 520, or may provide second power that is changed in real time (or periodically or continuously) through programmable power supply (PPS)-based PPS communication with the electronic device 501.

The electronic device 501 (e.g., the electronic device 201 of FIG. 2) according to an embodiment may include a Type C Port (female) (or input port) 552, a PDIC 554, a charger (or charging circuit) 556, a CPU (e.g., the processor 120 of FIG. 1, and also referred to as a processor) (and/or a system) 558, and/or a battery 559. The electronic device 501 according to an embodiment is not limited thereto, and may be configured to further include various elements or exclude some of the elements above. The electronic device 501 according to an embodiment may be configured to further include some of various elements of the electronic device 101 illustrated in FIG. 1.

The Type C port (female) 552 according to an embodiment may include a power pin (not shown) for receiving power from the multiport adapter 500, a signal pin (not shown) (e.g., at least one signal pin for communication (e.g., PD communication or PPS communication)) for data communication between the electronic device 501 and the PDIC 599, and at least one signal pin for data communication between the electronic device 501 and a peripheral device connected to the USB port 1 531, the USB port 2 532, the LAN port 533, or the HDMI port 534. According to an embodiment, the Type C port (female) 552 of the electronic device 501 may be combined with the Type C port (male) 520 of the multiport adapter 500.

The PDIC 554 according to an embodiment may detect a connection of the multiport adapter 500 through the Type C Port (female) 552, and identify (or check) the power (e.g., the amount of power or power information) which can be input from the multiport adapter 500 through PD-based CC communication or PPS communication with the PDIC 554 of the multiport adapter 500. The PDIC 554 according to an embodiment may configure input power of the charger 556, based on power which can be input from the multiport adapter 500.

The charger 556 according to an embodiment may provide power to the CPU (and/or system) 558 and/or the battery 559 of the electronic device 501, based on input power. The charger 556 according to an embodiment may discharge the battery 559 to provide power from the battery 559 to the CPU (and/or system) 558 in case that power greater than the input power is required by the CPU (and/or system) 558. The charger 556 according to an embodiment may perform charging of the battery 559 by using input power when power required by the CPU (and/or system) 558 does not exceed the input power.

The CPU (and/or system) 558 according to an embodiment may include a processor that performs the overall control operation of the electronic device 501. A system according to an embodiment may include at least one electrical part (or component) or electrical element that is included in an electronic device 501 and operates to perform at least one function of the electronic device 501.

An electronic device (e.g., the electronic device 101 of FIG. 1, the electronic device 201 of FIG. 2, or the electronic device 501 of FIG. 5) according to an embodiment may include a battery (e.g., the battery 559 of FIG. 5), an input port (e.g., the Type C Port (female) 552 of FIG. 5), a power delivery integrated chip (PDIC) 554, a charging circuit (e.g., the charger 556 of FIG. 5), and a processor (e.g., the CPU 558 of FIG. 5). The processor according to an embodiment may be configured to identify first power which can be input from a multiport adapter connected through the input port. The processor according to an embodiment may be configured to transmit a reserve power reduction request signal to the multiport adapter, based on identifying the reserve power reduction of the multiport adapter. The processor according to an embodiment may be configured to identify second power to be input from the multiport adapter and receive the second power, in response to the transmission of the reserve power reduction request signal.

The processor according to an embodiment may be configured to, when the charging state of the battery using the charging circuit is a discharging state in which the received first power is less than power consumption of the electronic device or is a high-speed charging state, transmit the reserve power reduction request signal to the multiport adapter by using the PDIC.

The PDIC according to an embodiment may be configured to perform power delivery (PD)-based configuration channel (CC) communication or programmable power supply (PPS) communication with the multiport adapter.

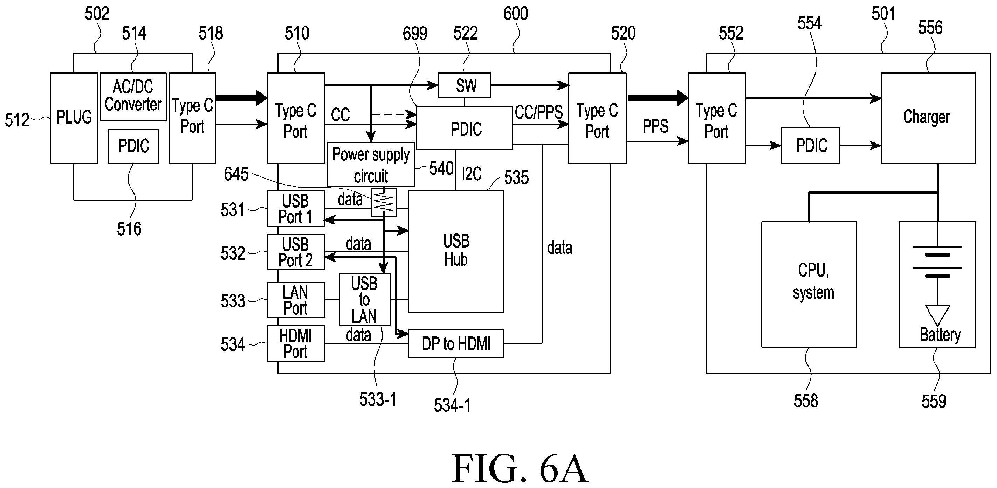

FIG. 6a is a diagram illustrating a power supply device, a multiport adapter, and an electronic device in a case where the multiport adapter includes a sensor for sensing power consumption, according to an embodiment.

Referring to FIG. 6a, the configuration of a power source device 502 (e.g., the power supply device 202 of FIG. 2) according to an embodiment may be the same as the configuration described in FIG. 5, and a redundant description can be omitted.

A multiport adapter 600 (e.g., the multiport adapter 200 of FIG. 2) according to an embodiment may further include a sensor circuit 645 in addition to the Type C Port (female) 510, the Type C Port (male) 520, the switch (SW) 522, the USB port 1 531, the USB port 2 532, the LAN port 533, the USB to LAN module 533-1, the HDMI port 534, the DP to HDMI module 534-1, the USB Hub 535, the power supply circuit 540, and/or the PDIC 599. The multiport adapter 600 according to an embodiment is not limited thereto, and may be configured to further include various elements or exclude some of the elements above.

The Type C Port (female) 510, the Type C Port (male) 520, the switch (SW) 522, the USB port 1 531, the USB port 2 532, the LAN port 533, the USB to LAN module 533-1, the HDMI port 534, the DP to HDMI module 534-1, the USB hub 535, and/or the power supply circuit 540 according to an embodiment may perform operations similar to those of the configurations described in FIG. 5, and a redundant description can be omitted.

The sensor circuit 645 according to an embodiment may include a power sensor (or a current sensor or a voltage sensor). The sensor circuit 645 according to an embodiment may sense (or detect) output power of a DC/DC converter in the power supply circuit 540 capable of performing an internal power supply function of the multiport adapter 600, and transfer the sensed output power of the DC/DC converter to a PDIC 699.

The PDIC 699 according to an embodiment may identify power consumption (or a power consumption amount) of the multiport adapter 600 (and/or at least one peripheral device port) in real time, periodically, or continuously, based on power (or current and/or voltage) sensed by the sensor circuit 645. The PDIC 699 according to an embodiment may identify adjusted reserve power (e.g., a second reserve power amount) in real time, periodically, or continuously, based on power consumption identified based on a sensed current and/or a voltage.

The PDIC 699 according to an embodiment may identify (or check, determine, or calculate), in real time or periodically or continuously, second power (or a second power amount) which can be provided to the electronic device 501, based on power input from the power source device and second reserve power. The PDIC 699 according to an embodiment may control the power supply circuit 540 to supply power to the Type C port (male) 520 of the electronic device 501, based on the second power amount. The PDIC 699 according to an embodiment may provide the second power having a second power amount that varies in real time (or periodically or continuously) through PPS-based programmable power supply (PPS) communication with the electronic device 501.

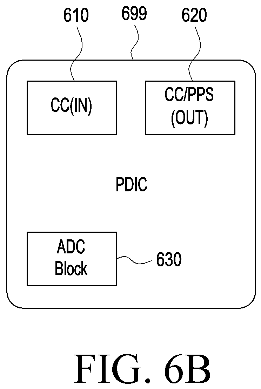

FIG. 6b is a block diagram illustrating a PDIC of a multiport adapter according to an embodiment.

Referring to FIG. 6b, a PDIC 699 of a multiport adapter 600 according to an embodiment may include a CC communication module 610, a CC and PPS communication module 620, and/or an ADC circuit 630.

The CC communication module 610 according to an embodiment may be connected to a signal pin (not shown) for data communication with the power source device 502 (e.g., data communication for power delivery (PD) (hereinafter, referred to as PD communication)) among the pins of the Type C port (female) 510, and may perform CC communication with the PDIC 516 of the power device 502.

The CC and PPS communication module 620 according to an embodiment may be connected to a signal pin (not illustrated) (e.g., at least one signal pin for communication (e.g., PD communication or PPS communication)) for data communication between the electronic device 501 and the PDIC 599 among the pins of the Type C port (male) 520, and may perform CC or PPS communication with the PDIC 554 of the electronic device 501.

The ADC circuit 630 according to an embodiment may be connected to the sensor circuit 645, and may detect power (or current and/or voltage) sensed by the sensor circuit 645. The PDIC 699 according to an embodiment may identify power consumption of the multiport adapter 600 (and/or at least one peripheral device port) in real time, periodically, or continuously, based on the detected power. The PDIC 699 according to an embodiment may identify the second reserve power in real time, periodically, or continuously, based on the power consumption, which is identified based on the sensed current and/or voltage.

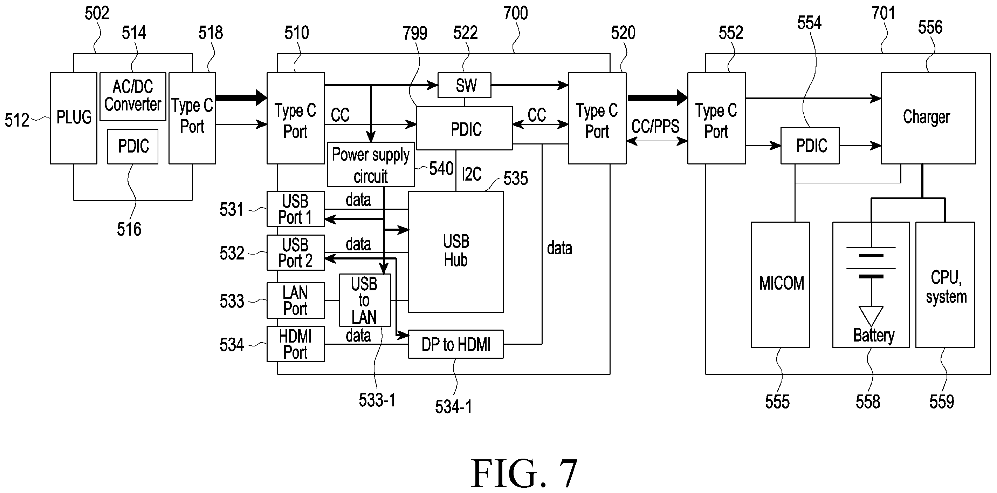

FIG. 7 is a diagram illustrating a power supply device, a multiport adapter, and an electronic device in a case where the multiport adapter receives a reserve power adjustment request from the electronic device, according to an embodiment.

Referring to FIG. 7, the configuration of a power source device 502 (e.g., the power supply device 202 of FIG. 2) according to an embodiment may be the same as that described in FIG. 5, and a redundant description can be omitted.

A multiport adapter 700 (e.g., the multiport adapter 200 of FIG. 2) according to an embodiment may include a Type C Port (female) 510, a Type C Port (male) 520, a switch 522, a USB port 1 531, a USB port 2 532, a LAN port 533, a USB to LAN module 533-1, an HDMI port 534, a DP to HDMI module 534-1, a USB hub 535, a power supply circuit 540, and/or a PDIC 799. The multiport adapter 700 according to an embodiment is not limited to thereto, and may be configured to further include various elements, or may be configured to exclude some of the elements above.

The Type C Port (female) 510, the Type C Port (male) 520, the switch 522, the USB port 1 531, the USB port 2 532, the LAN port 533, the USB to LAN module 533-1, the HDMI port 534, the DP to HDMI module 534-1, the USB hub 535, and/or the power supply circuit 540 according to an embodiment may perform operations similar to those described in FIG. 5, and a redundant description can be omitted.

The PDIC 799 according to an embodiment may identify power (e.g., a power amount, power information, or a power value) which can be input (or received or provided) from the power source device 202 connected through the Type C Port (female) 510, and specified first reserve power (e.g., a first reserve power amount, first reserve power information, or a first reserve power value) of the multiport adapter 200. The PDIC 799 according to an embodiment may perform USB Type C-based configuration channel (CC) communication with the power source device 502 connected to the Type C Port (female) 510. The PDIC 799 according to an embodiment may identify power which can be input (or received or provided) from the power source device 502 through CC communication with the power source device 502. The PDIC 799 according to an embodiment may identify specified first reserve power (e.g., tens of W or 15 W) of the multiport adapter 700, stored in memory (not shown). The first reserve power according to an embodiment may be the maximum power (or rated power) specified for the multiport adapter 700 so as to be used (or consumed) in the multiport adapter 700 (or the elements (e.g., the Type C Port (female) 510, the Type C Port (male) 520, the switch (SW) 522, the USB port 1 531, the USB port 2 532, the LAN port 533, the USB to LAN module 533-1, the HDMI port 534, the DP to HDMI module 534-1, the USB Hub 535, the power supply circuit 540, and/or the PDIC 799) included in the multiport adapter 700). The PDIC 799 according to an embodiment may provide first power to the electronic device 701, based on power input from a power source device and first reserve power, based on the connection of the electronic device 701. The PDIC 799 according to an embodiment may receive a request for adjusting the reserve power from the electronic device 701 while providing first power based on first reserve power to the electronic device 701. The PDIC 799 according to an embodiment may identify, based on the request (or reception of the request) for adjusting the reserve power from the electronic device 710, second reserve power (e.g., a second reserve power amount, second reserve power information, or a second reserve power value), based on the first power and power consumption of at least one peripheral device port (e.g., power consumption of the USB port 531, the USB port 532, the LAN port 533, or the HDMI port 534). The second saved power according to an embodiment may be equal to or less than (or may be less than) the first serve power. The PDIC 799 according to an embodiment may identify power consumption of a peripheral device, based on whether the peripheral device is connected to at least one of the USB port 1 531, the USB port 2 532, the LAN port 533, and the HDMI port 534, and may identify the second reserve power, based on the identified power consumption. The PDIC 799 according to an embodiment may sense (or detect) output power of a DC/DC converter in the power supply circuit 540 cap1able of performing an internal power supply function of the multiport adapter 700, and identify power consumption of the multiport adapter 700, based on the sensed output power of the DC/DC converter. The PDIC 799 according to an embodiment may identify second reserve power, based on a power consumption amount identified based the sensed output power of the DC/DC converter. The PDIC 799 according to an embodiment may identify (or check, determine, or calculate) second power which can be provided to the electronic device 701, based on the identified first power, the power consumption of the at least one peripheral device port, and the second reserve power.

The electronic device 701 (e.g., the electronic device 201 of FIG. 2) according to an embodiment may include a Type C Port (female) 552, a PDIC 554, a charger 556, a CPU (and/or system) 558, and/or a battery 559, and may further include a MICOM 555. The electronic device 701 according to an embodiment is not limited thereto, and may be configured to include various elements, or may be configured to exclude some of the elements above. The electronic device 501 according to an embodiment may include some of the various elements of the electronic device 101 shown in FIG. 1.

The Type C Port (female) 552, the charger 556, the CPU (and/or system) 558, and/or the battery 559 according to an embodiment may perform operations similar to the configurations described in FIG. 5, and a redundant description can be omitted.

The PDIC 554 according to an embodiment may detect connection of the multiport adapter 700 through the Type C Port (female) 552, and may identify (or check) first power (e.g., a first power amount or first power information) which can be input from the multiport adapter 700 through PD-based CC communication or PPS communication with the PDIC 799 of the multiport adapter 700. The PDIC 554 according to an embodiment may configure input power of the charger 556, based on first power (e.g., input power provided from the multiport adapter 700 to the electronic device 701, based on a first preserved power amount), which can be input from the multiport adapter 700.

The MICOM 555 according to an embodiment may identify whether the reserve power of the multiport adapter 700 is reduced. The MICOM 555 according to an embodiment may identify necessity of reserve power reduction of the multiport adapter 700 when the power required by the CPU (and/or system) 558 exceeds the first power and discharge of the battery 559 is performed or high-speed charging is required (or when power of a condition equal to or higher than a specified threshold is required), and may notify the PDIC 554 thereof.

The PDIC 554 according to an embodiment may transmit a signal associated with a reserve power adjustment request (or a reserve power reduction request) to the PDIC 799 of the multiport adapter 700 through the Type C Port (female) 552. The PDIC 554 according to an embodiment may identify (or check) second power (a second power amount or second power information) which can be input from the multiport adapter 700 through PD-based CC communication or PPS communication with the PDIC 799 of the multiport adapter 700 in response to the transmission of the reserve power adjustment request signal. The PDIC 554 according to an embodiment may configure an input power amount of the charger 556, based on second power (e.g., adjusted input power provided from the multiport adapter 700, based on the second reserve power) which can be input from the multiport adapter 700. The charger 556 according to an embodiment may provide power to the CPU (and/or system) 558 and/or a battery 559 of the electronic device 701, based on input power configured according to the second power.

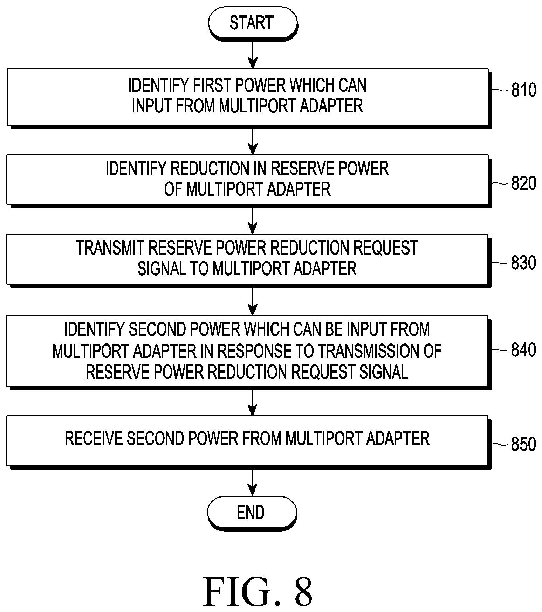

FIG. 8 is a flowchart illustrating an operation of receiving power from a multiport adapter in an electronic device, based on a power reserve adjustment request, according to an embodiment.

Referring to FIG. 8, the electronic device 701 (e.g., the electronic device 201 of FIG. 2) or the PDIC 554 of the electronic device 701 may perform at least one of operations 810, 820, 830, 840, and 850 according to an embodiment. In an embodiment, at least one of operations 810, 820, 830, 840, and 850 may be omitted, the order of some of the operations may be changed, or another operation may be added.

In operation 810, the PDIC 554 according to an embodiment may identify (or check) first power (e.g., a first power amount or first power information) which can be input from the multiport adapter 700. The PDIC 554 according to an embodiment may detect connection of the multiport adapter 700 through the Type C Port (female) 552, and may identify (or check) first power which can be input from the multiport adapter 700 through PD-based CC communication or PPS communication with the PDIC 799 of the multiport adapter 700. The PDIC 554 according to an embodiment may configure input power of the charger 556, based on first power (e.g., input power provided from the multiport adapter 700, based on the first reserve power) that can be input from the multiport adapter 700.

In operation 820, the PDIC 554 according to an embodiment may identify a reduction in reserve power of the multiport adapter 700. The PDIC 554 according to an embodiment may identify the reduction in the reserve power of the multiport adapter 700, based on a reserve power reduction request of the multiport adapter 700 from the MICOM 555. The MICOM 555 according to an embodiment may identify the reduction in the reserve power of the multiport adapter 700 when the power required by the CPU (and/or system) 558 exceeds a first power and the discharge of the battery 559 is performed or high-speed charging is required (or when power of a condition equal to or higher than a specified threshold value is required), and may notify the PDIC 554 of the same.

In operation 830, the PDIC 554 according to an embodiment may transmit a signal associated with a reserve power reduction request (or a reserve power adjustment request) to the PDIC 799 of the multiport adapter 700. The PDIC 554 according to an embodiment may transmit a signal associated with a reserve power adjustment request (or a reserve power reduction request) to the PDIC 799 of the multiport adapter 700 through the Type C Port (female) 552.

In operation 840, the PDIC 554 according to an embodiment may identify (or check) second power (or second power information) (e.g., input power provided from the multiport adapter 700, based on the second conservation power) which can be input from the multiport adapter 700 through PD-based CC communication or PPS communication with the PDIC 799 of the multiport adapter 700, in response to the transmission of the reserve power reduction request signal.

In operation 850, the PDIC 554 according to an embodiment may receive power based on second power which can be input from the multiport adapter 700, and may configure the input power of the charger 556. The charger 556 according to an embodiment may provide power to the CPU (and/or system) 558 and/or the battery 559 of the electronic device 701, based on the input power configured according to the second power.

An operation method in an electronic device (e.g., the electronic device 101 of FIG. 1, the electronic device 201 of FIG. 2, or the electronic device 501 of FIG. 5) according to an embodiment may include identifying first power to be input from a multiport adapter (e.g., the multiport adapter 200 of FIG. 2 or the multiport adapter 700 of FIG. 7) connected through an input port (e.g., the Type C port (female) 552 of FIG. 5). The method according to an embodiment may include transmitting a reserve power reduction request signal to the multiport adapter, based on identifying reduction in reserve power of the multiport adapter. The method according to an embodiment may include identifying second power to be input from the multiport adapter in response to the transmission of the reserve power reduction request signal. The method according to an embodiment may include receiving the second power from the multiport adapter.

The method according to an embodiment may include receiving the identified first power, based on connection of the multiport adapter through the input port. The method according to an embodiment may further include in case that a charging state of a battery of the electronic device using a charging circuit of the electronic device corresponds to a discharging state in which the received first power is less than power consumption of the electronic device, or a high-speed charging state, transmitting the reserve power reduction request signal to the multiport adapter.

The method according to an embodiment may include performing power delivery (PD)-based configuration channel (CC) communication or programmable power supply (PPS) communication with the multiport adapter.

An operation method of an electronic device (e.g., the electronic device 101 of FIG. 1, the electronic device 201 of FIG 2, or the electronic device 501 of FIG. 5) connected to a multiport adapter (e.g., the multiport adapter 200 of FIG. 2 or the multiport adapter 700 of FIG. 7) may include in case that the multiport adapter is connected to the electronic device, providing first power to the electronic device by using power input from a power source device connected through a power connection port. The method according to an embodiment may include in case that a charging state of a battery of the electronic device using a charging circuit of the electronic device corresponds to a discharging state in which the first power received from the multiport adapter is less than power consumption of the electronic device, or a high-speed charging state, transmitting a reserve power reduction request signal to the multiport adapter through configuration channel (CC) communication or programmable power supply (PPS) communication by the electronic device. The method according to an embodiment may include in response to reception of the reserve power reduction request signal, adjusting, based on the power and power consumption of at least one peripheral device connection port, reserve power, and providing, based on the power, the power consumption of the at least one peripheral device connection port, and the adjusted reserve power, second power to the electronic device by the multiport adapter. The method according to an embodiment may include receiving the second power from the multiport adapter by the electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An multiport adapter (200) comprising:
a power connection port (210);
a host connector (220);
at least one peripheral device connection port (230);
power supply circuitry (240); and
a controller (299), wherein the controller is configured to:
identify first power to be provided to an electronic device connected through the host connector based on power which is input from a power supply connected through the power connection port,
adjust reserve power based on the identified first power and power consumption of the at least one peripheral device connection port,
identify second power to be provided to the electronic device connected through the host connector based on the identified first power, the power consumption of the at least one peripheral device connection port, and the adjusted reserve power,
provide the second power to the electronic device through the host connector.

2. The multiport adapter of claim 1,
wherein the controller is further configured to:
identify the power consumption of the at least one peripheral device connection port based on whether each of the at least one peripheral device connection port is connected to a peripheral device.

3. The multiport adapter of claim 1, further comprising:
a sensor connected to the power supply circuitry,
wherein the controller is further configured to:
identify the power consumption of the at least one peripheral device connection port based on output power of the power supply circuitry obtained by using the sensor circuitry.

4. The multiport adapter of claim 1,
wherein the controller is further configured to:
receive a request for adjusting the reserve power from the electronic device, after providing first power to the electronic device based on specified first reserve power of the multiport adapter and the power.

5. The multiport adapter of claim 1,
wherein the at least one peripheral device connection port comprises at least one of a first USB port, a second USB port, a LAN port, or an HDMI port.

6. The multiport adapter of claim 1,
wherein the power connection port is a USB Type C female port and the host connection port is a USB Type C male port.

7. The multiport adapter of claim 1,
wherein the controller is further configured to:
perform a CC (configuration channel) communication based on a PD (power delivery) or a PPS (programmable power supply) communication with the electronic device.

8. The multiport adapter of claim 4, further comprising:
memory configured to store information of the specified first reserve power of the multiport adapter.

9. An electronic device comprising:
a battery (559);
an input port (552);
a power delivery integrated chip (PDIC) (554);
charging circuitry (556);
memory storing instructions; and
a processor (558),
wherein the instructions, when executed by the processor, cause the electronic device to:
identify first power inputtable from a multiport adapter connected through the input port,
transmit, by using the PDIC, a request signal for reducing reserve power to the multiport adapter based on identifying that the multiport adapter needs to reduce the reserve power,
identify second power to be input from the multiport adapter in response to transmission of the request signal for reducing the reserve power,
receive the second power.

10. The electronic device of claim 9,
wherein the instructions, when executed by the processor, cause the electronic device to:
when a charging state of the battery using the charging circuitry is a discharge state in which the received first power is less than the power consumption of the electronic device, or a high-speed charging state, transmit the request signal for reducing the reserve power to the multiport adapter by using the PDIC.

11. The electronic device of claim 9,
wherein the PDIC is configured to perform a CC (configuration channel) communication based on a PD (power delivery) or a PPS (programmable power supply) communication with the multiport adapter.

12. A power supply control method in a multiport adapter (200), the method comprising:
identifying, based on power which is input from a power source device (202) connected through a power connection port (210), first power to be provided to an electronic device (201) connected through a host connector (220);
adjusting reserve power, based on the identified first power and power consumption of the at least one peripheral device connection port;
identifying second power to be provided to the host connector the electronic device (201) , based on the identified first power, the power consumption of the at least one peripheral device port, and the adjusted reserve power; and
providing the identified second power to the electronic device through the host connector.

13. The method of claim 12, further comprising identifying, based on whether a peripheral device is connected to each of the at least one peripheral device connection port of the multiport adapter, the power consumption of the at least one peripheral device port.

14. An operation method in an electronic device (201), the method comprising:
identifying first power to be input from a multiport adapter connected through an input port;
transmitting a reserve power reduction request signal to the multiport adapter, based on identifying that reserve power of the multiport adapter needs to be reduced;
in response to the transmission of the reserve power reduction request signal, identifying second power to be input from the multiport adapter; and
receiving the second power from the multiport adapter.

15. An operation method of an electronic device (201) connected to a multiport adapter (200), the method comprising:
in case that the multiport adapter is connected to the electronic device, providing first power to the electronic device by using power input from a power source device connected through a power connection port;
in case that a charging state of a battery of the electronic device using a charging circuit of the electronic device corresponds to a discharging state in which the first power received from the multiport adapter is less than power consumption of the electronic device, or a high-speed charging state, transmitting a reserve power reduction request signal to the multiport adapter through configuration channel (CC) communication or programmable power supply (PPS) communication by the electronic device;
in response to reception of the reserve power reduction request signal, adjusting reserve power, based on the power and power consumption of at least one peripheral device connection port, and providing, based on the power, the power consumption of the at least one peripheral device port, and the adjusted reserve power, second power to the electronic device by the multiport adapter; and
receiving the second power from the multiport adapter by the electronic device.
